# EUROPÄISCHE PATENTSCHRIFT

(11) **EP 1 646 801 B1**
(45) Veröffentlichungstag und Bekanntmachung des Hinweises auf die Patenterteilung: **20.12.2006**
(21) Anmeldenummer: 04763181.7
(22) Anmeldetag: 13.07.2004
(51) Int. Cl.: F16D 65/78, F16D 65/00, F16D 65/14, F16D 65/38

(54) **PNEUMATISCH ODER ELEKTROMOTORISCH BETÄTIGBARE SCHEIBENBREMSE**
DISC BRAKE OPERATED PNEUMATICALLY OR BY ELECTRIC MOTOR
FREIN A DISQUE A ACTIONNEMENT PNEUMATIQUE OU ELECTROMAGNETIQUE

(30) Priorität: 15.07.2003 DE 10331929
(43) Veröffentlichungstag der Anmeldung: 19.04.2006
(73) Patentinhaber: KNORR-BREMSE SYSTEME FÜR NUTZFAHRZEUGE GMBH, 80809 München (DE)
(72) Erfinder: GASSLBAUER, Franz, 84381 Johanniskirchen (DE); SPRINGER, Mario, 94535 Eging (DE)
(74) Vertreter: Mattusch, Gundula
(86) Internationale Anmeldenummer: PCT/EP2004/007705
(87) Internationale Veröffentlichungsnummer: WO 2005/008095

(56) Entgegenhaltungen:
- DE-C- 19 515 063
- DE-U- 9 410 455
- US-A- 3 490 343
- US-A- 4 506 768

## Beschreibung

Die Erfindung betrifft eine pneumatisch oder elektromotorisch betätigbare Scheibenbremse gemäß dem Oberbegriff des Anspruchs 1.

Der prinzipielle Aufbau einer derartigen Scheibenbremse ist beispielsweise aus der DE 195 15 063 C2 bekannt.

Die darin gezeigte und beschriebene Scheibenbremse weist eine Zuspanneinrichtung mit zwei Stellspindeln auf, die im Bremssattel verschieblich gelagert sind und an deren der Bremsscheibe zugewandtem Ende jeweils ein Druckstück angeordnet ist. Die Druckstücke tragen einen Bremsbelag, der im Funktionsfall eine Bremsscheibe kontaktiert.

Zum Schutz des Innenraumes des Bremssattels sowie der Stellspindeln vor Verschmutzungen ist im jeweiligen Austrittsbereich der Stellspindel aus dem Bremssattel ein Faltenbalg angeordnet, der an einer Verschlußplatte befestigt ist, durch die der Bremssattel verschlossen ist. Insoweit ist die Verschlußplatte Bestandteil des Bremssattels, an dem der Faltenbalg auch direkt befestigt sein kann, wenn keine Verschlußplatte vorgesehen ist. Andererseits ist der Faltenbalg an dem Druckstück befestigt, das im übrigen unmittelbar an der Stellspindel angeschlossen ist.

Die üblicherweise in Nutzfahrzeugen eingebauten Scheibenbremsen unterliegen bei Betätigung und der entstehenden Reibungswärme einer erheblichen thermischen Belastung, die sich, ausgehend vom Bremsbelag, über die angeschlossenen metallischen Druckstücke und die daran angeschlossenen Stellspindeln bis in das Innere des Bremssattels und hin zu relevanten Teilen der Zuspanneinrichtung fortsetzt.

Gleichermaßen wird der am Druckstück befestigte Faltenbalg mit Wärme beaufschlagt, wodurch die Lebensdauer des aus einem Kunststoff oder ähnlichem Material bestehenden Faltenbalges herabgesetzt wird.

Die nicht unerhebliche thermische Belastung der genannten Funktionsteile steht einer angestrebten optimierten Standzeit entgegen, so daß relativ kurze Wartungsintervalle erforderlich sind, um die Betriebssicherheit dauerhaft zu gewährleisten.

Naturgemäß sind die Wartungsarbeiten an sich, aber auch die belastungsbedingten notwendigen Auswechselungen der Bauteile, mit erheblichen Kosten verbunden, sowohl hinsichtlich deren Beschaffung wie auch der Montage bzw. Demontage und der notwendigen Stillstandszeit des Fahrzeuges.

Aus der DE 94 10 455 U1 ist eine weitere gattungsgemäße Scheibenbremse bekannt, bei der zum Schutz gegen Bremshitze eine Isolierstoffplatte am Druckstück befestigt ist.

Der vorliegenden Erfindung liegt daher die Aufgabe zugrunde, eine Scheibenbremse der gattungsgemäßen Art so weiter zu entwickeln, daß ihre Standzeit erhöht und Reparaturkosten dadurch gesenkt werden.

Diese Aufgabe wird durch eine Scheibenbremse gelöst, die die Merkmale des Anspruchs 1 aufweist.

Danach ist zur thermischen Unterbrechung zwischen dem Druckstück und der Stellspindel direkt oder indirekt am Faltenbalg ein zumindest die dem Druckstück zugewandte Stirnseite abdeckender Wärmeschild angeschlossen. Ein unmittelbarer Kontakt zwischen dem Druckstück und der Stellspindel besteht somit nicht mehr, so daß auch keine zu große Wärmeübertragung mehr von dem Druckstück auf die Stellspindel erfolgt.

Dadurch wird auch eine entsprechende Wärmebeaufschlagung angrenzender Bauteile, wie beispielsweise einer Traverse, in der die Stellspindel geführt ist, sowie der Zuspanneinrichtung wirksam verringert. Gleichermaßen wird eine Aufheizung des Innenraumes des Bremssattels sowie der angrenzenden Bauteile durch Strahlungswärme vermieden.

Damit trägt die Erfindung in signifikanter Weise dazu bei, die Standzeit der Scheibenbremse zu erhöhen, d. h., die Reparaturintervalle bzw. Kontrollzeiträume zu verlängern.

Naturgemäß ergibt sich daraus eine Kostenreduzierung gegenüber einer Scheibenbremse nach dem Stand der Technik, zu der auch verringerte Montage- und Materialkosten beitragen.

Der Wärmeschild besteht aus einem Material mit relativ zum sonstigen Material der Druckstücke geringer Wärmeleitfähigkeit und ist als separates Teil, in Form einer die Stirnseite der Stellspindel und gegebenenfalls noch angrenzende Seitenbereiche überdeckende Scheibe vorgesehen, die praktisch zwischen dem Topfelement und der Stellspindel angeordnet ist. Das Topfelement ist axial gesichert an der Stellspindel befestigt die jedoch frei drehbar in dem Topfelement gehalten ist. Diese Art der Befestigung kann durch eine umlaufende Ringnut der Stellspindel realisiert werden, in die das Topfelement durch entsprechende Anformung formschlüssig eingreift.

Das Topfelement, zweckmäßigerweise als Blechformteil ausgebildet, ist mit dem Faltenbalg durch Umspritzen verbunden, und zwar umlaufend. Da der Faltenbalg andererseits entweder unmittelbar am Bremssattel oder beispielsweise einer Verschlußplatte befestigt ist, ist der Austrittsbereich der Stellspindel aus dem Bremssattel hermetisch abgedichtet, so daß keine Schmutzpartikel in den Innenraum des Bremssattels gelangen können bzw. an die Stellspindel und deren Gewinde.

Durch die unmittelbare Anbindung des Faltenbalges an dem Topfelement, das, wie erwähnt, mit der Stellspindel verbunden ist, kann auf eine bislang notwendige Sekundärdichtung und zugehörige Bauteile verzichtet werden. Hierdurch und durch die einfache, trotzdem sehr wirkungsvolle Art der Festlegung des Faltenbalges an der Stellspindel durch Anbindung am Topfelement ergibt sich eine preiswerte Herstellung sowie eine kostengünstige Montage bzw. Demontage. Dabei ist die Baueinheit Topfelement/Wärmeschild in unterschiedlichen Ausführungsformen der Scheibenbremse einsetzbar. So kann beispielsweise das zugeordnete Druckstück mit dem Topfelement verbunden sein. Denkbar ist aber auch, das Topfelement mit Wärmeschild bei einer Konstruktion einzusetzen, bei der das Druckstück einstückiger Bestandteil des Bremsbelages bzw. eines Belagträgers ist.

Die Festlegung des ein Schutzblech bildenden Topfelementes am Faltenbalg im Sinne des genannten Umspritzens kann beispielsweise mit einem geeigneten Elastomer erfolgen, vorzugsweise einem Silikonkautschuk. In jedem Fall wird durch die nun nicht mehr unmittelbare Anbindung des Faltenbalges am Druckstück erreicht, daß auch der Faltenbalg einer geringeren Wärmebelastung ausgesetzt ist, was unter anderem dazu fährt, daß dieser auch bei mehreren Bremsbelagwechseln einsetzbar ist, wodurch sich selbstverständlich ebenfalls Kostenvorteile ergeben.

Der Wärmeschild ist als separate Scheibe zwischen dem Topfelement und der zugewandten Stirnseite der Stellspindel plaziert und mit dem Topfelement oder der Stellspindel Verbunden, wozu sich das genannte Elastomer eignet, das dann praktisch als Verbindungsmittel dient.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Teildarstellung einer Scheibenbremse in einer geschnittenen Draufsicht,
- Figur 2: eine Einzelheit der Scheibenbremse in einer Schnittdarstellung,
- Figur 3: eine Einzelheit aus der Figur 2, ebenfalls geschnitten dargestellt.

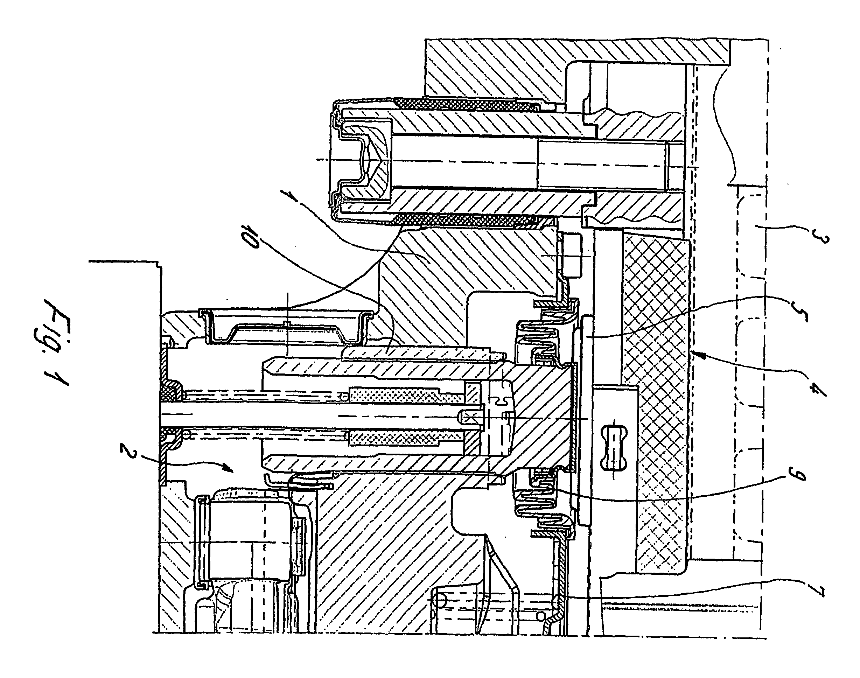

In der Figur 1 ist eine Hälfte einer pneumatisch betätigbaren Scheibenbremse dargestellt, die einen als Schiebesattel ausgebildeten Bremssattel 1 aufweist, der eine Bremsscheibe 3 in ihrem oberen Umfangsbereich umfaßt. Anstelle einer pneumatischen ist auch eine elektromotorische Betätigung der Scheibenbremse möglich.

Zu beiden Seiten der Bremsscheibe 3 sind einseitig dargestellte Bremsbeläge 4 angeordnet, von denen jeweils einer an Druckstücken 5 befestigt ist oder anliegt, mit denen der zugeordnete Bremsbelag 4 gegen die Bremsscheibe 3 preßbar ist.

Dies erfolgt mittels einer drehhebelbetätigten Zuspanneinrichtung 2, die in Verbindung mit der die Druckstücke 5 tragenden wenigstens eine Stellspindel 10 steht, die axial bewegbar im Bremssattel 1 geführt sind.

Dargestellt und beschrieben ist lediglich ein Druckstück 5 mit den zugehörigen Bauteilen. Die tatsächliche Bauform umfaßt jedoch an der jeweiligen Seite zwei Druckstücke 5.

Im vorliegenden Ausführungsbeispiel ist der Bremssattel 1 auf seiner der Bremsscheibe 3 zugewandten Seite weitgehend durch eine Verschlußplatte 7 verschlossen, die im Austrittsbereich der Stellspindel 10 durchbrochen ist.

Zur Abdichtung des Austrittsbereiches der Stellspindel 10 aus dem Bremssattel 1 ist jeweils ein mit der Verschlußplatte 7 verbundener Faltenbalg 9 vorgesehen, der andererseits an der Stellspindel 10 angeschlossen ist.

Im Falle der einstückigen Ausbildung des Bremssattels 1, also bei Verzicht auf die Verschlußplatte 7, sind die Faltenbälge 9 direkt am Bremssattel 1 befestigt, z.B. eingepreßt.

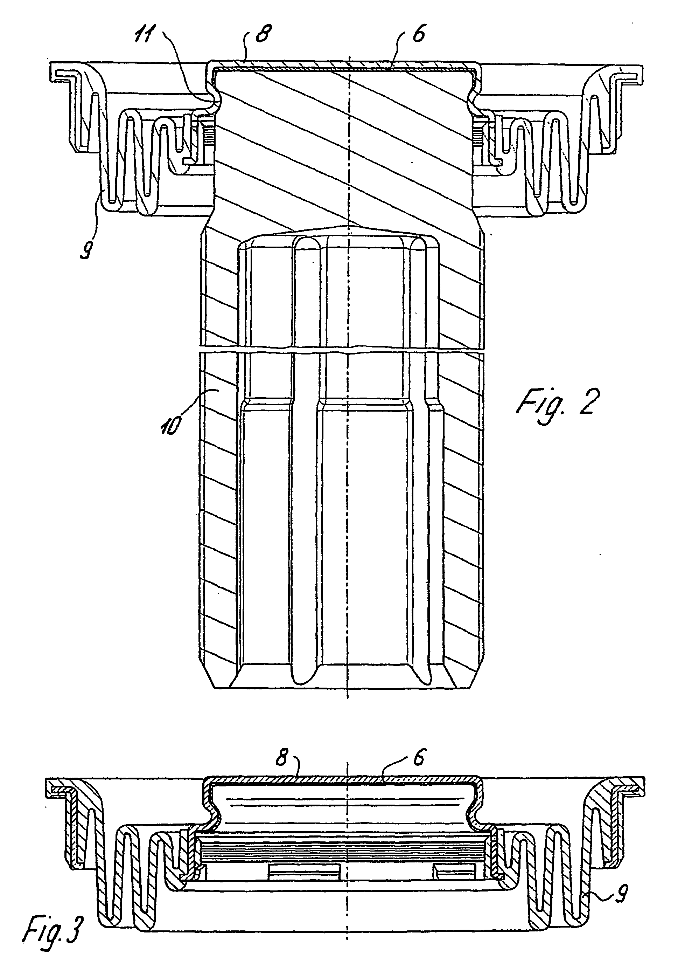

In der Figur 2 ist deutlich zu erkennen, daß zur thermischen Unterbrechung zwischen dem Druckstück 5 und der Stellspindel 10 ein Wärmeschild 6 aus einem Material mit geringer Wärmeleitfähigkeit angeordnet ist, der die dem Druckstück 5 zugewandte Stirnseite der Stellspindel 10 abdeckt.

Der Wärmeschild 6 gemäß der Figur 2 ist als separate Scheibe ausgebildet und stirnseitig an der Stellspindel 10 anliegend.

Abgedeckt und gehalten wird der Wärmeschild 6 von einem Topfelement 8, das in eine Ringnut 11 der Stellspindel 10 derart formschlüssig eingreift, daß es axial gesichert ist, die Stellspindel 10 jedoch frei drehbar ist.

An das Topfelement 8 ist der Faltenbalg 9 angeschlossen und zwar durch Umspritzen mittels eines geeigneten Materials, beispielsweise einem Elastomer und hier vorzugsweise Silikonkautschuk.

Der gegenüberliegende, insoweit freie Rand des Faltenbalges 9 ist mit der Verschlußplatte 7 oder in einem anderen Fall direkt mit dem Bremssattel 1 fest verbunden, so daß sowohl der Faltenbalg 9 wie auch das Topfelement 8 verdrehgesichert gegenüber der Stellspindel 10 gehalten sind.

An der der Stellspindel 10 gegenüberliegenden Seite des Topfelementes 8 liegt das Druckstück 5 an, wobei es fest mit dem Topfelement 8 verbunden sein kann oder, falls das Druckstück 5 integraler Bestandteil des Bremsbelages 4 ist, lediglich in Wirkverbindung damit steht, d. h. lose anliegend.

In der Figur 3 ist als Einzelheit das Topfelement 8 mit dem angeschlossenen Faltenbalg 9 dargestellt, wobei das Topfelement 8 innenseitig mit einer Beschichtung versehen ist, die den Wärmeschild 6 bildet.

In jedem Fall ist wesentlich, daß der Faltenbalg 9 nun nicht mehr, wie im Stand der Technik, am Druckstück 5 befestigt ist, sondern mittelbar an der Stellspindel 10, wodurch eine von dem Druckstück 5 ausgehende Wärmeübertragung wirksam verhindert wird.

### Bezugszeichenliste

- 1: Bremssattel
- 2: Zuspanneinrichtung
- 3: Bremsscheibe
- 4: Bremsbelag
- 5: Druckstück
- 6: Wärmeschild
- 7: Verschlußplatte
- 8: Topfelement
- 9: Faltenbalg
- 10: Stellspindel
- 11: Ringnut

## Patentansprüche

1. Pneumatisch oder elektromotorisch betätigbare Scheibenbremse für ein Nutzfahrzeug, mit einem eine Bremsscheibe (3) übergreifenden Bremssattel (1) und mindestens einer Zuspanneinrichtung (2) zum Zuspannen der Scheibenbremse, wobei wenigstens eine Stellspindel (10) auf ihrer der Bremsscheibe (3) zugewandten Seite ein Druckstück (5) aufweist und zur Abdichtung des Austrittsbereiches der Stellspindel (10) aus dem Bremssattel (1) mit diesem oder mit daran befestigten Teilen ein Faltenbalg (9) verbunden ist, **dadurch gekennzeichnet, dass** an der Stellspindel ein Topfelement (8) festgelegt ist und zwischen dem Druckstück (5) und der Stellspindel (10) am Faltenbalg (9) direkt oder indirekt ein zumindest die dem Druckstück (5) zugewandte Stirnseite der Stellspindel (10) abdeckender Wärmeschild (6) angeschlossen ist, der als separate Scheibe ausgebildet ist und mittels eines Elastomers mit dem Topfelement (8) oder der Spindel (10) verbunden ist, wobei das Topfelement (8) an der Stellspindel (10) festgelegt ist.

2. Scheibenbremse nach Anspruch 1, **dadurch gekennzeichnet, dass** das Topfelement (8) mit dem Faltenbalg (9) verdrehsicher verbunden ist.

3. Scheibenbremse nach Anspruch 1 oder 2, **dadurch gekennzeichnet, dass** das Topfelement (8) durch Umspritzen mit einem Elastomer, vorzugsweise Silikonkautschuk, mit dem Faltenbalg (9) verbunden ist.

4. Scheibenbremse nach einem der vorhergehenden Ansprüche, **dadurch gekennzeichnet, dass** das Topfelement (8) axial gesichert an der Stellspindel (10) festgelegt ist, wobei diese gegenüber dem Topfelement (8) bzw. dem angeschlossenen Faltenbalg (9) frei drehbar ist.

5. Scheibenbremse nach einem der vorhergehenden Ansprüche, **dadurch gekennzeichnet, dass** die Stellspindel (10) eine umlaufende Ringnut (11) aufweist, in der das Topfelement (8) formschlüssig einliegt.

6. Scheibenbremse nach einem der vorhergehenden Ansprüche, **dadurch gekennzeichnet, dass** das Topfelement (8) mit dem Druckstück (5) verbunden ist.

7. Scheibenbremse nach einem der vorhergehenden Ansprüche, **dadurch gekennzeichnet, dass** das Topfelement (8) an dem einstückig mit einem Bremsbelag (4) verbundenen Druckstück anliegt.

## Claims

1. A disk brake, operated pneumatically or by electric motor, for a commercial vehicle having a brake calliper (1) which encompasses a brake disc (3) and at least one tensioning device (2) for tensioning the brake disc, at least one adjusting spindle (10) having a thrust piece (5) on the side facing the brake disc (3) and a gaiter (9) being connected to said adjusting spindle (10) or components affixed thereto in order to seal the area in which the adjusting spindle (10) leaves the brake calliper (1),
**characterised in that**
fixed to the adjusting spindle (10) is a pot element (8) and connected directly or indirectly to the gaiter (9) between the thrust piece (5) and the adjusting spindle (10), covering at least the front face of the adjusting spindle (10) facing the thrust piece (5), is a heat shield (6) which is designed as a separate disc and is connected to the pot element (8) or the spindle (10) by means of an elastomer, the pot element (8) being fixed to the adjusting spindle (10).

2. A disc brake in accordance with claim 1,
**characterised in that**
the pot element (8) is connected to the gaiter (9) in such a manner that it is unable to rotate.

3. A disc brake in accordance with claim 1 or 2,
**characterised in that**
the pot element (8) is connected to the gaiter (9) by means of injection moulding using an elastomer, preferably silicon rubber.

4. A disc brake in accordance with one of the preceding claims,
**characterised in that**
the pot element (8) is fixed, axially secured, to the adjusting spindle (10), the latter being able to rotate freely in relation to the pot element (8) and the gaiter (9) connected thereto.

5. A disc brake in accordance with one of the preceding claims,
**characterised in that**
the adjusting spindle (10) has a peripheral ring groove (11) in which the pot element (8) engages in a positive fit.

6. A disc brake in accordance with one of the preceding claims,
**characterised in that**
the pot element (8) is connected to the thrust piece (5).

7. A disc brake in accordance with one of the preceding claims,
**characterised in that**
the pot element (8) lies adjacent to the thrust piece (5) which is connected to a brake pad (4) forming one piece.

## Revendications

1. Frein à disque à actionnement pneumatique ou par moteur électrique pour un véhicule utilitaire, comprenant un étrier (1) de frein enjambant un disque (3) de frein et au moins un dispositif (2) de serrage du frein à disque, dans lequel au moins une broche (10) de réglage a une pièce (5) d'application d'une pression sur son côté tourné vers le disque (3) de frein et, pour rendre étanche la partie de la broche (10) de réglage qui sort de l'étrier (1) de frein, un soufflet (9) est assemblé à celui-ci ou à des pièces qui y sont fixées, **caractérisé en ce qu'**un élément (8) en forme de pot est fixé à la broche de réglage et entre la pièce (5) d'application d'une pression et la broche (10) de réglage est raccordé sur le soufflet (9) directement ou indirectement un bouclier (6) thermique recouvrant au moins le côté frontal de la broche de réglage tournée vers la pièce (5) d'application d'une pression , le bouclier étant constitué sous la forme d'un disque distinct et étant relié au moyen d'un élastomère à l'élément (8) en forme de pot ou à la broche (10), l'élément (8) en forme de pot étant fixé à la broche (10) de réglage.

2. Frein à disque suivant revendication 1, **caractérisé en ce que** l'élément (8) en forme de pot est assemblé sans possibilité de torsion au soufflet (9) .

3. Frein à disque suivant revendication 1 ou 2, **caractérisé en ce que** l'élément (8) en forme de pot est assemblé au soufflet (9) de préférence par recouvrement par extrusion d'un élastomère, de préférence de caoutchouc de silicone.

4. Frein à disque suivant l'une des revendications précédentes, **caractérisé en ce que** l'élément (8) en forme de pot est fixé en étant immobilisé axialement sur la broche (10) de réglage, celle-ci pouvant tourner librement par rapport à l'élément (8) en forme de pot ou par rapport au soufflet (9) raccordé.

5. Frein à disque suivant l'une des revendications précédentes, **caractérisé en ce que** la broche (10) de réglage a une rainure (11) annulaire qui fait le tour et dans laquelle l'élément (8) en forme de pot est inséré à complémentarité de forme.

6. Frein à disque suivant l'une des revendications précédentes, **caractérisé en ce que** l'élément (8) en forme de pot est assemblé à la pièce (5) d'application d'une pression.

7. Frein à disque suivant l'une des revendications précédentes,**caractérisé en ce que** l'élément (8) en forme de pot s'applique à la pièce d'application d'une pression qui est d'une seule pièce avec une garniture (4) de frein.
